# EUROPEAN PATENT SPECIFICATION

(11) **EP 3 452 571 B1**
(45) Date of publication and mention of the grant of the patent: **24.06.2020**
(21) Application number: 17720161.3
(22) Date of filing: 03.05.2017
(51) Int. Cl.: C12C 11/00, C12C 11/02

(54) **FERMENTATION TANK WITH SIDE PORTS AND METHOD OF OPERATION**
GÄRTANK MIT SEITENANSCHLÜSSEN UND VERFAHREN ZUM BETRIEB
CUVE DE FERMENTATION PRÉSENTANT DES ORIFICES LATÉRAUX ET PROCÉDÉ DE FONCTIONNEMENT

(30) Priority: 03.05.2016 EP 16168121
(43) Date of publication of application: 13.03.2019
(73) Proprietor: Carlsberg Breweries A/S, 1799 Copenhagen V (DK)
(72) Inventor: SINGH, Surinder, CH-8852 Altendorf (CH); JAKOB, Michael, CH-8835 Feusisberg (CH)
(74) Representative: Høiberg P/S
(86) International application number: PCT/EP2017/060544
(87) International publication number: WO 2017/191192

(56) References cited:
- CN-A- 101 225 359
- US-A- 3 345 179
- US-A- 3 729 321

## Description

### Field of invention

The present invention relates to a fermentation tank to decrease the time for brewing a beer. The present invention relates specifically to a fermentation tank with side ports and method of operating such tank. More specifically, the present invention relates to a fluid communication unit that is coupled to the fermentation tank with the side ports.

### Background of invention

Beer brewing is a time consuming process. Typically, the time from pitching wort with yeast to the time where fermented green beer is decanted, takes around 200 or more hours. Thus, there is a great need to provide a method and a system that decreases brewing time.

An example of a brewing system, where a fermentation tank is used, and coupled to several external containers is described in DE 100 03 155. However, such a system is not very efficient and it is not practical to have several processes occurring at different locations. US3345179 illustrates another example of a brewing system comprising a fermentation tank with a bottom port in a bottom of the fermentation tank, and at least three side ports in fluid communication with each other.

### Summary of invention

The present disclosure relates in a first aspect to a method for fermenting a wort in a fermentation tank comprising a bottom port in a bottom of the fermentation tank, and at least three side ports, being a first side port, a second side port, and a third side port, wherein said side ports are in fluid communication with each other, comprising the steps of: letting wort into the fermentation tank via the bottom port;
pitching wort with yeast; incubating wort with yeast under conditions that allow the yeast to grow, thereby obtaining a partly fermented wort; pumping the partly fermented wort out of the fermentation tank via at least one of the side ports and back into the fermentation tank via at least another of the side ports for at least obtaining a further fermented wort. Preferably, the method further comprises drawing off the further fermented wort out of at least one of the side ports.

An effect of the disclosed method is that wort and yeast experience an increase in contact time due to pumping as described above. In comparison to a conventional fermentation process, yeast is able to be in contact with wort along a distance that follows a direct path, for example from the bottom of a tank to the top of a tank and along pipes. However following the disclosed method, the combinations of paths, and thereby the distances from the bottom to the top of the tank is increased by having the at least three side ports in fluid communication with each other. Further, by having at least three side ports, it may be possible to generate a flow of wort. The path from a side port and near to the bottom may be a path that is curved and/or along a side wall of the fermentation tank. Such a path is longer than a direct path. Additionally, by having at least three side ports, it may be possible to generate a flow of wort and/or yeast, such that yeast is forced to sediment to the bottom of the fermentation tank.

An advantage of the present invention is that partly fermented wort is able to circulate out of one side port and back into the fermentation tank via another of the side ports while at the same time and/or a later time, said wort is able to be drawn off via a third of the side ports. Similarly, fermented wort may be drawn off via one of the side ports prior to or before yeast cropping via the bottom port is or has taken place. For example, partly fermented wort may circulate from the first side port to the second side port. In one embodiment, the yeast cells may then sediment on the bottom, getting ready to be cropped. However, some of said wort in the top of the fermentation tank may be ready to be drawn off, and this wort can therefore be drawn off via one of the upper side port, for example via the third side port. The drawing off can take place at the same time, partly fermented wort is circulating in the lower part of the fermentation tank. In preferred embodiments, the drawing off takes place after circulation has stopped. In either way, brewing time is greatly decreased.

The present invention provides thus a method that reduces the fermentation and sedimentation time.

In a second aspect of the present invention, there is provided a fermentation system for fermenting a wort, comprising: a fermentation tank comprising a bottom surface and a sidewall, a bottom port located in the bottom surface and configured for at least letting wort into the fermentation tank, at least three side ports, being a first side port, a second side port, and a third side port, located on the sidewall and above the bottom surface, wherein said side ports are in fluid communication with each other; and a circulation system for providing fluid communication between said at least three side ports, and configured such that wort and/or partly fermented wort, and/or fermented wort, is able to be circulated between said at least three side ports, thereby providing a circulation of said wort from the fermentation tank back into the fermentation tank. Preferably, the circulation system is further configured such that wort and/or partly fermented wort, and/or fermented wort is able to be drawed off the fermentation tank via any of the side ports.

Part of the circulation system may be a fluid communication unit, responsible for providing the fluid communication. In some embodiments, part of the fluid communication unit may, for example, be a pipe in fluid communication with valves. The side ports may comprise valves, such as one-way valves and/or preferably two way-valves. The fluid communication unit may in some embodiments be configured for controlling the valves, i.e. to open and/or close the valves. In other embodiments, the fluid communication unit or part thereof may be configured for removing CO₂ bubbles from the yeast cell, the CO₂ bubbles being associated with the yeast cells. CO₂ bubbles are associated with yeast cells in a wort, meaning they are clinging to yeast cells. In other words, the CO₂ as here referred to is CO₂ that is associated to the yeast cells, but not through covalent chemical bonds. The fluid communication unit may comprise a vibration unit configured for generating controllable-vibration. The fluid communication unit may comprise a pressure unit configured for generating pressure changes within the fluid communication unit. The fluid communication unit may be a pipe connected to other pipes, thereby forming the circulation system.

The fluid communication unit alone, may not be responsible for regulating the temperature of wort and or pumping wort in the circulation system and/or fermentation tank - this may be achieved at other locations, such as at locations referring to the other pipes. In other words, the circulation system may comprise a pump and/or temperature regulating means. An effect of having at least three side ports is that said wort is able to be circulated from near the bottom surface, via the first side port, and back into the fermentation tank, such that said wort is able to be fermented more rapid than in conventional systems. Many other effects are described in further details in the detailed description of the invention.

In a third aspect of the present invention is provided a method according to the first aspect, wherein the fermentation tank is a fermentation tank as described in the second aspect.

In a fourth aspect of the present invention is provided a fermentation system according to the second aspect, being operated by the method according to the first aspect.

### Description of drawings

**Fig. 1** shows an embodiment of the present invention in relation to the disclosed method.
**Fig. 2** shows an embodiment of the present invention in relation to the disclosed fermentation system.
**Fig. 3** shows another embodiment of the present invention in relation to the disclosed method.

### Definitions

The yeast may be any yeast strain, but frequently the yeast strain suitable for use in beer brewing. Several different strains useful for beer brewing are known to the skilled person including both top-fermenting and bottom-fermenting yeast strains.

For example, the yeast may be a lager yeast, e.g. yeast belonging to the species S. *pastorianus,* formerly known as the species S. Carlsbergensis. The yeast may also be an ale yeast, e.g. yeast belonging to the species *S*. *cerevisiae.*

By the term "wort" as used herein is meant a liquid extract of malt and/or a liquid extract of cereal. Thus, wort may be a liquid extract of milled malt, or green malt, or milled green malt. In barley brewing, wort may be prepared by incubating a liquid extract of un-malted barley with an enzyme mixture that hydrolyzes the barley components. In addition to said malt or barley-derived extracts, wort may also be prepared from malt and additional components, such as additional starch-containing material partly converted into fermentable sugars. The wort is in general obtained by mashing, optionally followed by "sparging", in a process of extracting residual sugars and other compounds from spent grains after mashing with hot water.

"Mashing" is the incubation of milled malt in water. Mashing is preferably performed at a specific temperature, and in a specific volume of water. The temperature and volume of water may be controlled, as these affect the rate of decrease of enzyme activity derived from the malt thus essentially influencing the amount of starch hydrolysis that can occur. Protease action may also be of importance as the yeast would require amino acids for growth.

Mashing can occur in the presence of adjuncts, which is understood to comprise any carbohydrate source other than malt, such as, but not limited to, barley, barley syrups, or maize, or rice - either as whole kernels or processed products like grits, syrups or starch. All of the aforementioned adjuncts may be used principally as an additional source of extract (syrups are typically dosed after mashing). The requirements for processing of the adjunct in the brewery depend on the state and type of adjunct used, and in particular on the starch gelatinization or liquefaction temperatures. If the gelatinization temperature is above that for normal malt saccharification, then starch may be gelatinized and liquefied before addition to the mash.

Sparging is typically conducted in a lauter tun, a mash filter, or in another apparatus to allow separation of the extracted water from spent grains. The wort obtained after mashing is generally referred to as "first wort", while the wort obtained after sparging is generally referred to as the "second wort". If not specified, the term wort may be first wort, second wort, or a combination of both.

After sparging the wort may be heated or even boiled. During conventional beer production, wort is boiled together with hops, however wort may also be referred to wort that has not been boiled with hops. Wort without hops, may also be referred to as "sweet wort".

Thus, wort used in the methods described herein may for example be boiled wort.

### Detailed description of the invention

### Pumping from at least one of the side ports to at least another of the side ports

In one embodiment of the invention the fermentation tank comprises three side ports. In one embodiment of the disclosed method, the fermentation tank further comprises a fourth side port. According to the disclosed method, the number of ports is however not limited to only three or four, and may in general be as many as desired and/or required. The number of ports may depend on the size of fermentation tank. Relating to all aspects of the present disclosure, the fermentation tank may in some embodiments further comprise a fourth side port. Although in some embodiments, four side ports may be preferred, the invention is fully able to be carried out using only three side ports.

The side ports on the fermentation tank may be separated vertically on the sidewall. Preferably, the first port is nearest to the bottom port, the second port and third port are thus preferably located further away from the bottom port. Thus, when the tank is being filled with wort, the first side port may be covered first, and hereafter, the second side port, the third side port, eventually a fourth side port, and even additional side ports.

Most preferably, the side ports may be separated vertically along a line on the sidewall. Having them on a line may allow the circulation system to be coupled to the fermentation tank in a simple manner, and even such that a compact circulation system, or part thereof, may be designed.

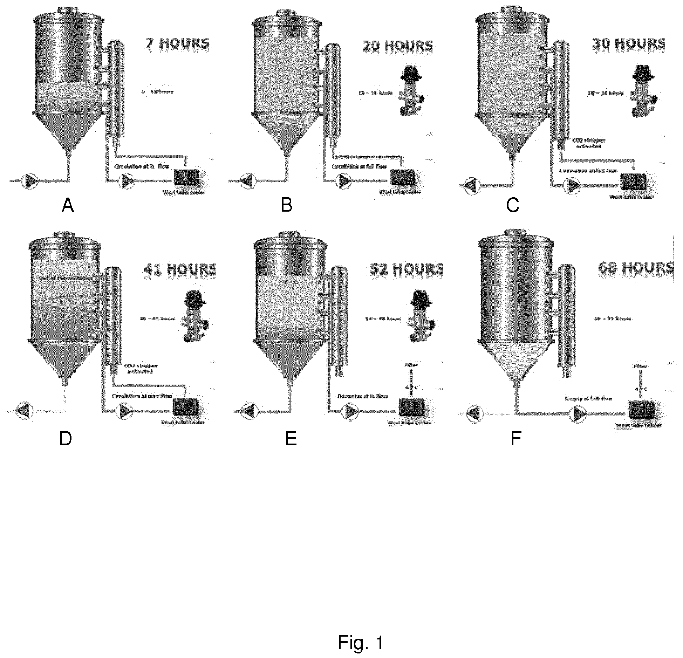

In Fig. 1 is shown a part of a circulation system comprising a fluid communication unit comprising four fluid communication ports, wherein the four communication ports are in fluid communication with four side ports, thereby providing that the four side ports are in fluid communication with each other. The fluid communication unit is as shown coupled to the four side ports along a vertical line, making the fluid communication unit compact, allowing it also to be mounted to the fermentation tank in an easy manner.

In another embodiment of the disclosed method, the method further comprises the step of pumping the partly fermented wort out of the fermentation tank via the bottom port and back into the fermentation tank via at least another of the side ports. This may for example provide circulation of partly fermented wort from the bottom port to the last side port, i.e. for example the third or fourth side port.
According to the presently disclosed method, there are many possible configurations of fluid communications and many ways to pump the partly fermented wort. Having the at least three side ports and the bottom port provides a flow of the partly fermented flow such that the fermentation process is increased. Several further embodiments of specific flow directions are described in the following.

In one embodiment of the disclosed method,the at least one of the side ports is the first side port and the third side port. In other words, the partly fermented wort may be pumped out of the first side port and the third side port. This may for example be when the fermentation tank is full. While the wort is being let into the fermentation tank via the bottom port, the wort is at first only able to be pumped out of the first side port, since it may not have reached the third side port. Thus, in the beginning, i.e. while wort is being let into the fermentation tank, while the wort is not yet partly fermented wort, the wort may thus firstly be pumped out of the first side port. While this takes place, wort may still be let into the fermentation tank. An example of this is shown in **Fig. 1****.A**. After a while, when wort has reached the third side port, wort may be able to be pumped out of both the first side port and the third side port. This is for example shown in **Fig. 1****.B**.

In a second embodiment the at least one of the side ports the second side port and the fourth side port. In other words, the partly fermented wort may be pumped out of the second side port and the fourth side port. This may for example be when the fermentation tank is full.

In a further embodiment, the at least another of the side ports is the second side port and the fourth side port. In other words, the partly fermented wort may be pumped back into the fermentation tank via the second side port and the fourth side port. This may for example be when the fermentation tank is full. It may thus be possible to obtain pumping such that partly fermented wort is pumped out of the first side port, back into the fermentation tank via the second side port, out of the third side port, and back into the fermentation tank via the fourth side port. An example of this is shown in **Fig. 1****.C.**

In yet a further embodiment, the at least another of the side ports is the first side port and the third side port. In other words, the partly fermented wort may be pumped back into the fermentation tank via the first side port and the third side port. This may for example be when the fermentation tank is full. It may thus be possible to obtain pumping such that partly fermented wort is pumped out of the second side port, back into the fermentation tank via the first side port, out of the fourth side port, and back into the fermentation tank via the third side port. An example of this is shown in **Fig**. **1****.D**. In such a step, the partly fermented wort may turn into fully fermented wort.

According to the disclosed method, the word as referenced to wort may simply be wort, but it may also mean partly fermented wort or fully fermented wort. It may depend on the process, as for example just described, where the partly fermented wort may turn into fully fermented wort. Thus, in some embodiments, partly fermented wort may also be understood as fully fermented wort, or simply fermented wort.

As used herein the term "partly fermented wort" refers to wort, which has been incubated with yeast at least for some time.

As used herein the term "fully fermented wort" refers to wort, which has been fermented with yeast for sufficient time to achieve a predefined level of a fermentation product in the wort and/or to achieve a predefined level of a compound consumed during fermentation. For example the wort can be considered fully fermented when a predetermined level of ethanol is achieved. Wort can also be considered fully fermented when the sugar level has been reduced below a predetermined threshold, e.g. when the °plato is lower than a predetermined threshold. Wort can also be considered fully fermented wort when the diacetyl is in spec. The diacetyl is considered to be in spec when the level of diacetyl is below a predefined threshold, which is set at a level below the threshold considered off-flavor in beer. Preferably, the diacetyl is considered to be in spec when the level of diacetyl is at the most 30 ppb or at the most 50 ppb.

In a preferred embodiment of the presently disclosed method, the steps as referenced to Figures **1****.A-1.D,** are performed in that specific order to achieve a fully fermented wort.

In some embodiments, the step of pumping the partly fermented wort out of the fermentation tank via the bottom port is prior a step of stopping letting wort into the fermentation tank. This may allow that wort passes though the bottom port most efficiently.

In one embodiment, the method further comprises the step of pumping the partly fermented wort from the fermentation tank via the first side port and via the fourth side port and back into the fermentation tank via the third side port. This step may be prior a step of having partly fermented wort being pumped out of the second side port, back into the fermentation tank via the first side port, out of the fourth side port, and back into the fermentation tank via the third side port. Both of these steps may facilitate that a specific flow is generated within the fermentation tank. This specific flow, as described later, may be responsible for the yeast to sediment on the bottom of the fermentation tank. In other words, this may be responsible for speeding up the process of yeast sedimentation, and therein contribute to a faster process of for example brewing a beer.

In general, the method as herein disclosed is not limited to three or four side ports, and thus, the method may further comprise the step of pumping the partly fermented wort from the fermentation tank via the first side port and via a last side port of the side ports and back into the fermentation tank via one or more of side ports in-between the first side port and the last side port.

Also, and in relation to having three, four or more side ports, the method may further comprise the step of pumping the partly fermented wort from the fermentation tank via a first part of said side ports and back into the fermentation tank via one or more side port(s) being one or more neighbouring side port(s) to said first part of said side ports.

As already described, pumping from one and another side port may facilitate sedimentation of yeast cells to the bottom of the fermentation tank.

The step of sedimenting yeast cells to the bottom of the fermentation tank may be enhanced by further removing CO₂ bubbles associated with the yeast cells from the yeast cells. The removal may take place outside the fermentation tank, for example inside a fluid connection between at least two side ports. The removal may be performed by any means allowing removal of CO₂ bubbles associated with the yeast, for example by subjecting the the partly fermented wort to controllable vibration, for example at a predetermined frequency. By removing CO₂ bubbles associated with the yeast cells from the yeast cells, some of the yeast cells may get buoyancy that is reduced in comparison to its initial buoyancy. Accordingly, some of the yeast cells may sediment rapidly to the bottom of the fermentation tank. Said controllable vibration may be controllable in manner allowing to turn on and off the vibration at desired times and/or by controlling the degree of vibration.

Removal of CO₂ bubbles associated with the yeast cells from the yeast cells may alternatively and/or additionally be performed by controllably generating pressure changes of the partly fermented wort.

In preferred embodiment of the disclosed method, wherein the step of pumping out of the at least one of the side ports, is based on the volume of partly fermented wort in the tank. For example, when the fermentation is filled up to a quarter of the full volume, pumping partly fermented wort of the first side port may be initiated. As another example, when the fermentation is more than half full, pumping partly fermented wort of the first side port may be initiated.

### Pumping from the bottom port to one of the side ports

In one embodiment, said side ports further are in fluid communication with the bottom port. The method may therefore further comprises the step of pumping the partly fermented wort out of the fermentation via the bottom port and back into the fermentation tank via at least one of the side ports for mixing the partly fermented wort.

The step of mixing the partly fermented wort may preferably be prior the step of obtaining the further fermented wort.

In a preferred embodiment, the step of mixing the party fermented wort is by pumping partly fermented wort back into the fermentation tank via a top side port, such as the third side port or a fourth side port.

### Yeast cropping

In one embodiment, the presently disclosed method further comprises the step of cropping the yeast from the bottom port, in particular when the yeast cells have sedimented on the bottom. For example, cropping after the yeast cells have sedimented on the bottom by pumping via the side ports as described above or preferably via the bottom port. The term "yeast cropping" as used herein refers to harvesting yeast during and/or after fermentation. The yeast cropping could result in a majority of yeast cells being harvested or only a fraction of yeast cells being harvested.

### Adjusted and pulsed pump flow

In one embodiment of the presently disclosed method, the step of pumping is with an adjusted pump flow relative to a maximum pump flow. The pump flow may be adjusted during the method. The maximum pump flow may be used at various times, but in particular maximum pump flow may be used when the fermentation tank is full. Similarly, an adjusted pump flow which is reduced compared to the maximum pump flow may be used at various times, but in particular adjusted pump flow may be used when the fermentation tank is partly full, i.e. when the fermentation tank is being filled with wort or when the yeast is being cropped and/or when the wort is being decanted as described below.

In some embodiments, it follows that the adjusted pump flow is regulated according to which side ports are being used.

In other embodiments, the adjusted pump flow is between 1 and 100 percent, such as between 10 and 90 percent, such as between 20 and 80 percent, such as between 30 and 70 percent, such as between 40 and 60 percent.

For example, when pumping out of the first side port, for example when wort is also being let into the fermentation tank, pumping may be adjusted to 60 percent relative to maximum pump flow.

In another embodiment, the step of pumping is pulsed. Using pulsed pumping, leading to pulsated circulation, may enhance that yeast is settled fast.

### Temperature regulation

In one embodiment, the disclosed method further comprises the step of regulating the temperature of the partly fermented wort before the partly fermented wort is pumped back into the fermentation tank. For example, the temperature may be regulated to less than 24 degrees Celsius, such as less than 20 degrees Celsius, such as about 14 degrees Celsius. For example, the temperature may be kept in the range of 10 to 15°C. Preferably, the temperature is kept at 14 degrees Celsius.

In general the temperature may be regulated according to the particular yeast strain used. Thus, the temperature is preferably regulated to be a temperature, which support growth of said yeast strain.

Frequently, lager yeast strains, e.g. yeast belonging to the species *S*. *pastorianus,* are best used at temperatures ranging from 7 to 15°C. Thus, the temperature may be kept at a temperature in the range from 7 to 15°C, when the yeast is a lager yeast such as *S*. *pastorianus.*

Frequently, ale yeast, e.g. yeast belonging to the species *S*. *cerevisiae* are best used at temperatures ranging from 10 to 25°C, though some strains will not actively ferment below 12°C. Thus, the temperature may be kept at a temperature in the range from 10 to 25°C, e.g. in the range from 12 to 25°C, when the yeast is an ale yeast, such as S. *cerevisiae.*

Other yeast strains may be used, and the skilled person will be able to determine a suitable temperature for a particular yeast strain.

### CO₂ stripping from yeast cells

In a preferred embodiment, the disclosed method further comprises the step of removing, i.e. stripping, CO₂ bubbles from the yeast cells of the partly fermented wort before the partly fermented wort is pumped back into the fermentation tank. Preferably, this step may be activated when the fermentation tank is full.
Thus, said CO2 stripping may be a step of removing CO₂ bubbles associated with the yeast cells from the yeast cells.

### Decanting

Decanting may refer to tapping of the beer, however, in this case, sediments, such as yeast, may not be present in the beer.

The method may further comprise the step of decanting fermented wort after less than 100 hours, such as less than 92 hours, such as less than 86 hours, such as less than 76 such as after 68 hours, such as after 60 hours, such as after 52 hours, and/or such as after 48 hours. The method as herein disclosed, allows that fermented wort is obtained after a short period of time, and accordingly, it is possible to decanting fermented wort after a short period of time, such as less than 100 hours, most preferably after only 48 hours. Decanting may be via the side ports and via the bottom port, for example as shown in **Fig. 1****.E** and **Fig. 1****.F,** respectively.

The method of fermenting wort according to the present invention is a fast method of fermenting wort. Accordingly, it is preferred that the entire method of fermenting wort is completed within at the most 90 hours, preferably at the most 80 hours, more preferably at the most 75 hours, such as at the most 70 hours. The method is considered completed once the fermented wort has been drawn off the tank. Said fermented wort is preferably fully fermented, i.e. the fermented wort comprises little or essentially no fermentable sugars.

### Side ports

In some embodiments of the disclosed system, each of the side ports are configured for being reconfigurable between providing circulation of said wort from the fermentation tank, or providing circulation of said wort into the fermentation tank, or providing no circulation of said wort. This may depend on the method of operation of the system or tank as described in the first aspect.

In one embodiment of the presently disclosed system, the side ports are configured for providing a circulation of said wort from the fermentation tank via the first side port and back into the fermentation tank via the second side port. However, the opposite configuration may also be possible.

In another embodiment, the side ports are configured for providing a circulation of said wort from the fermentation tank via the third side port and back into the fermentation tank via the fourth side port. However, the opposite configuration may also be possible.

In some embodiments, the side ports are configured for providing a circulation of said wort from the fermentation tank via the first side port and via the third side port and back into the fermentation tank via the second side port and via the fourth side port.

In other embodiments, the side ports are configured for providing a circulation of said wort from the fermentation tank via the first side port and via the fourth side port and back into the fermentation tank via the third side port.

In yet other embodiments, the side ports are configured for providing a circulation of wort from the fermentation tank via the second side port and the fourth side port and back into the fermentation tank via the first side port and via the third side port.

In a preferred embodiment, the side ports are configured for decanting fermented wort from the fermentation tank, preferably starting from a side port located furthest away from the bottom surface.

In one embodiment the side ports are configured to be positioned above each other, preferably they are positioned essentially perpendicular above each other. The space between the side ports may be regular or unregular.

### Nozzles

In one embodiment, the side ports are equipped with nozzles, each of said nozzles having a nozzle opening, wherein the nozzle opening for each of said nozzles are different. In this way, a specific flow of partly fermented wort may be obtained. However, in an alternative embodiment, the nozzle opening for each of said nozzles may be identical, as this may also provide a specific flow partly fermented wort. The specific flow is described further below.

In a second embodiment, some of said nozzles are configured to provide a flow of said wort in an angle below and/or along a horizontal plane. Some of the other nozzles may be configured to provide a flow of said wort that is approximately in the horizontal plane. In this way, the flow may be such that yeast is forced to sediment on the bottom surface.

In a preferred embodiment, some of said nozzles are nozzles on the first side port and on the third side port. These specific nozzles locations may be optimal for providing a flow, wherein the flow direction is towards the bottom surface.

### Bottom port and bottom surface

In one embodiment, the bottom port is configured for letting said wort out of the fermentation tank. This may for example be such that fermented wort can be decanted. Alternative and/or additionally, this embodiment may also be such that partly fermented wort can circulate from the bottom port to one of the at least the side ports.

In a second embodiment, the bottom port is in direct fluid communication with the circulating system. This may allow for circulation of the partly fermented wort.

In a preferred embodiment, the bottom port is configured for providing a circulation of said wort from the fermentation tank via the bottom port and back into the fermentation tank via one or more of the side ports, preferably via the second side port and via the fourth side port.

Most preferably, the bottom surface is a conical surface, for example such that wort may be guided by the gravitational force towards the apex of the conical surface. In addition and/or alternatively, said wort may be guided by the centrifugal force generated by at least some of the nozzles.

Accordingly, the bottom port may be located at the apex of the conical surface, thereby providing easy decanting.

### Circulation system

The circulation system, or part of the circulation system may comprise the fluid communication unit, as already described. However, part of the circulation system may also comprise the nozzles as also previously described, although the nozzles may be located inside the fermentation tank.

In one embodiment, at least two of the at least three side ports comprise a nozzle, each of the nozzles being angled between 20 degrees and 30 degrees relative to a tangent of the sidewall. Thereby is provided a flow of wort that follows the curve of the side wall inside the fermentation tank. In some embodiments, at least one of the at least three side ports comprise a nozzle, each of the nozzles being angled at 90 degrees relative to a tangent of the sidewall.

In one embodiment, the circulation system is configured to control the pressure and/or flow of said wort that is circulated back into the fermentation tank.

In another embodiment, the circulation system and/or the nozzeles is/are configured for mixing said wort in the fermentation tank with said wort circulated back into the fermentation tank. Thus, the circulation system may provide that the wort in the fermentation tank stabilize to a state that is close to state of the wort that is circulated back into the fermentation tank, for example a temperature state, or temperature equilibrium may be reached efficiently using the disclosed circulation system. Preferably, the circulation system may be configured for generating a flow of said wort in the fermentation tank, such that particles and/or yeast cells in said wort are forced to sediment on the bottom surface. As described previously, this may due to the nozzles and/or pressure and/or flow as provided by the circulation system.

In this manner yeast is forced to sediment on the bottom surface due to centrifugal forces created in the tank.

The flow as has been described already may preferably be helical, most preferably such that the end of the helix ends at the bottom port. A helical flow provides a centrifugal force of yeast within the helix, and may thus provide means for forcing yeast, or yeast particles to sediment, on the bottom surface, especially when the bottom surface is angled as for example a conical surface. Accordingly, a conical surface with the helical flow provides an effect of allowing yeast particles, to sediment rapidly.

In some embodiments, the circulation system comprises temperature regulating means configured for controlling the temperature of said wort in the fermentation tank. The temperature regulating means may in some embodiments be a heat exchanger. The temperature in the fermentation tank may be set by controlling the temperature in the circulation system rather than in the fermentation tank itself. It may be mixing that ensures that the desired temperature in the fermentation tank is reached.

In other embodiments, the circulation system comprises CO₂ controlling means configured for removing or stripping CO₂ bubbles clinging to the yeast cell the fermentation tank. The yeast cells are thereby prevented from remaining buoyant in the fermenting wort.

Preferably, the circulation system may comprise pumping means configured with a controller to regulate the pump flow relative to maximum pump flow. This may ensure proper control of the wort flow.

Most preferably, the pump flow is regulated according to which side ports are being used.

### Example 1 - a process of brewing beer

**Fig. 1**. shows an embodiment of the disclosed method. Also an embodiment of the disclosed system is shown. In the example, six time points are shown in a process of brewing beer, i.e. **Fig. 1****.A-1.F.** The process takes in total 68 hours, that is from wort is being let into the fermentation tank and to the point where fermented wort, or beer, is decanted. **Fig. 1****.A** shows that wort is being let into the fermentation tank and circulated between the first and second side port, i.e. from the first to the second side port, here with an adjusted pump flow set to 60 percent of full pump flow. This first time point is as the process has been running for 7 hours. After 20 hours, the fermentation tank is completely full as shown in **Fig. 1****.B**, and partly fermented wort is being circulated via all the side ports, specifically out of the second and fourth side port, and back into the fermentation tank via the first and third side port, here a full pump flow. After 30 hours, CO₂ stripping is being initiated using the circulation system, as shown in **Fig. 1****.C.** As can also be seen, the circulation system comprises temperature regulating means. Fermentation is complete after 41 hours, and yeast is forced to sediment on the conical bottom surface, by having fermented wort being pumped out of the fermentation tank via the second and fourth side port, whilst back into the fermentation tank via the first and third side port, as can be seen in **Fig. 1****.D**. Decanting is taking place already after 48 hours, and after 52 hours, as shown in **Fig. 1****.E**, part of the beer in fermentation tank has already been decanted. Decanting is here via the side ports. When the beer is below a level, where no side ports are in fluid communication with the beer, the bottom port is opened, and beer is decanted from the bottom port, here being in fluid communication with the circulation system, as shown in **Fig. 1****. F**. In order to empty the fermentation tank completely, the flow out of the bottom port is a full pump flow.

### Example 2 - a fermentation system

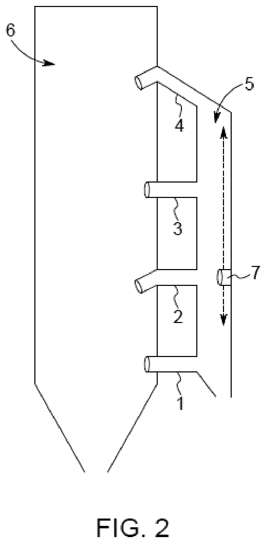

**Fig. 2**. shows an example of a fermentation system according to the present invention. The system comprises a fermentation tank **6** comprising a bottom surface and a sidewall. A bottom port is located in the bottom surface and configured for at least letting wort into the fermentation tank, at least three side ports, being a first side port **1,** a second side port **2,** and a third side port **3** located on the sidewall. A fourth side port 4 is also included. The side ports are in fluid communication with each other and the bottom port. A circulation system **5** is for providing fluid communication between the four side ports, and configured such that wort and/or partly fermented wort, and/or fermented wort, is able to be circulated between said at least three side ports, thereby providing a circulation of said wort from the fermentation tank back into the fermentation tank. The circulation system is further configured such that wort and/or partly fermented wort, and/or fermented wort is able to be drawed off the fermentation tank via any of the side ports. As can be seen on **Fig. 2**, the side ports are separated vertically on the sidewall. Further, the side ports are separated vertically along a line on the sidewall. At least two of the at least three side ports comprise a nozzle, each of the nozzles being angled between 20 degrees and 30 degrees relative to a tangent of the sidewall. In **Fig. 2**, the angle seems to be angled relative to a horizontal plane. However, the nozzles are in a horizontal plane and angled such that they follow the curvature of the tank. By having this angle, wort is able to flow at an optimal path into the tank along the curved path. A first part of the circulation system comprises a CO₂ removing means 7 configured for removing CO₂ bubbles associated with the yeast cells from the yeast cells.

### Example 3 - another process of brewing beer

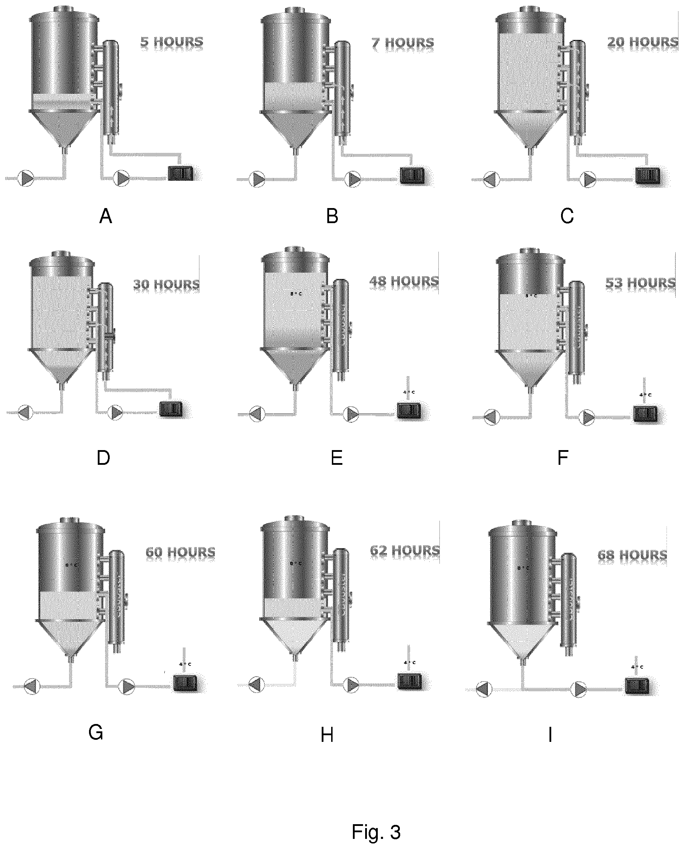

**Fig. 3**. shows an embodiment of the method for fermenting a wort in a fermentation tank according to the present invention. Also is shown an embodiment of the disclosed fermentation system comprising a fermentation tank and a circulation system. **Fig. 3****.A-3.I.** show nine time points in a process of brewing beer.

The process takes in total 68 hours, which is from wort is being let into the fermentation tank and to the point where fermented wort, or beer, is decanted.

**Fig. 3****.A** shows the fermentation tank according to the present invention. The fermentation tank comprises a bottom port and at least three side ports, being a first side port, a second side port, and a third side port, wherein said side ports are in fluid communication with each other. In addition, a fourth side port is also shown. **Fig. 3****.A** shows further that wort is first let into the fermentation tank via the bottom port. The wort may here be pitched with yeast and incubated under conditions that allow the yeast to grow, thereby obtaining partly fermented wort. As can also be seen from **Fig. 1****.A,** the partly fermented wort is pumped out of the fermentation tank via at least one of the side ports, according to the invention, and in this case the first side port.

**Fig. 3****.A** shows that the partly fermented wort is pumped back into the fermentation tank via at least another of the side ports, according to the invention, and in this case the second side port. In **Fig. 3****.A** and **Fig. 3****.B,** the partly fermented wort is pumped at half the maximum flow rate.

**Fig. 3****.C** shows that the partly fermented wort is pumped out of the fermentation tank via at least one of the side ports and back into the fermentation tank via at least another of the side ports for both fermenting the yeast cells and sedimenting the yeast cells to the bottom of the fermentation tank. After 20 hours, the fermentation tank is completely full as shown, and partly fermented wort is circulated via all the side ports, specifically out of the second and fourth side port, and back into the fermentation tank via the first and third side port, here a full or maximum flow rate.
**Fig. 3****.D** shows an optional embodiment, where a CO₂ removing means is changed from an inactive state to an active state. The CO₂ removing means removes in the active state CO₂ bubbles associated with the yeast cells from the yeast cells. The removal takes place outside the fermentation tank and inside a fluid connection between at least two side ports. By removing the CO₂ bubbles from the yeast cell, the yeast cells experience a reduced buoyancy and are sedimentation of the yeast cells is therefore enhanced using the CO₂ removing means. The CO₂ removing means may operate by subjecting the partly fermented wort to controllable vibration at a predetermined frequency, for example as in the principle of a tuning fork. Thus, the controllable vibration may be supplied by a tuning fork. In other embodiments, the CO₂ removing means may operate generating pressure changes within the fluid communication unit.

As shown in the **Fig. 3A-3D****,** the circulation system comprises temperature regulating means.

**Fig. 3****.E** shows that decanting or drawing off the beer takes place already after 48 hours via the fourth side port, i.e. from a side port located in the top of the fermentation tank.

**Fig. 3****.F** shows that decanting or drawing off the beer takes place via the third side port, at a later time from a position lower than the fourth side port.

**Fig. 3****.G** shows that decanting or drawing off the beer takes place via the second side port, at an even later time from a position lower than the third side port.

**Fig. 3****.H** shows that decanting or drawing off the beer takes place via the first side port, at an even later time from a position lower than the second side port.

**Fig. 3****.E-3.H** show that beer is sequentially drawed off or sequentially decanted from an upper placed side port to a lower placed side port. This reduces brewing time. As can be seen all the beer is already decanted after only 68 hours. In the first two decanting steps, the beer is decanted at half of the maximum flow. In the last two decanting steps, the beer is decanted at the maximum flow.

**Fig. 3****.I** shows that the bottom port is opened, and beer is decanted from the bottom port. In order to empty the fermentation tank completely, the flow out of the bottom port is a full pump flow.

## Claims

1. A method for fermenting a wort in a fermentation tank comprising a bottom port in a bottom of the fermentation tank, and at least three side ports, being a first side port, a second side port, and a third side port, wherein said side ports are in fluid communication with each other, comprising the steps of:
- letting wort into the fermentation tank via the bottom port;
- pitching wort with yeast;
- incubating wort with yeast under conditions that allow the yeast to grow, thereby obtaining a partly fermented wort;
- pumping the partly fermented wort out of the fermentation tank via at least one of the side ports and back into the fermentation tank via at least another of the side ports for at least obtaining a further fermented wort, and
- drawing off the further fermented wort out of at least one of the side ports.

2. The method according to claim 1, wherein said side ports further are in fluid communication with the bottom port, and the method further comprises the step of pumping the partly fermented wort out of the fermentation tank via the bottom port and back into the fermentation tank via at least one of the side ports for mixing the partly fermented wort.

3. The method according to claim 2, wherein the step of mixing the partly fermented wort is performed prior to the step of obtaining the further fermented wort.

4. The method according to any of the preceding claims 2-3, wherein the step of mixing the party fermented wort is by pumping back into the fermentation tank via a top side port, such as the third side port or a fourth side port.

5. The method according to any of the preceding claims, wherein pumping the partly fermented wort out of the fermentation tank via at least one of the side ports and back into the fermentation tank via at least another of the side ports is further for sedimenting yeast cells to the bottom of the fermentation tank.

6. The method according to claim 5, wherein the step of sedimenting yeast cells to the bottom of the fermentation tank comprises removing CO₂ bubbles associated with the yeast cells from the yeast cells, the removal taking place outside the fermentation tank and inside a fluid connection between at least two side ports by subjecting the partly fermented wort to controllable vibration at a predetermined frequency, or by controllably generating pressure changes of the partly fermented wort.

7. The method according to any of the claims, further comprising the step of cropping the yeast cells via the bottom port, wherein the yeast cells have sedimented on the bottom of the fermentation tank.

8. The method according to any of the claims, further comprising the step of cooling the partly fermented wort outside the fermentation tank.

9. A fermentation system for fermenting a wort, comprising:
- a fermentation tank comprising a bottom surface and a sidewall, a bottom port located in the bottom surface and configured for at least letting wort into the fermentation tank, at least three side ports, being a first side port, a second side port, and a third side port, located on the sidewall, wherein said side ports are in fluid communication with each other; and
- a circulation system for providing fluid communication between said at least three side ports, and configured such that wort and/or partly fermented wort, and/or fermented wort, is able to be circulated between said at least three side ports, thereby providing a circulation of said wort from the fermentation tank back into the fermentation tank, and the circulation system further configured such that wort and/or partly fermented wort, and/or fermented wort is able to be drawed off the fermentation tank via any of the side ports.

10. The fermentation system according to claim 9, wherein the side ports are separated vertically on the sidewall, and/or wherein the side ports are separated vertically along a line on the sidewall.

11. The fermentation system according to any of the claims 9-10, wherein fermentation system is configured for providing a circulation of said wort from the fermentation tank via the bottom port and back into the fermentation tank via one or more of the side ports.

12. The fermentation system according to any of the claims 9-11, wherein at least two of the at least three side ports comprise a nozzle, each of the nozzles being angled between 20 degrees and 30 degrees relative to a tangent of the sidewall.

13. The fermentation system according to any of the claims 9-12, wherein a first part of the circulation system comprises a CO₂ removing means configured for removing CO₂ bubbles associated with the yeast cells from the yeast cells.

14. The fermentation system according to claim 13, wherein the CO₂ removing means is a controlled vibration unit configured for vibrating at a predetermined frequency, or wherein the CO₂ removing means is a controlled pressure unit configured for generating pressure changes within the fluid communication unit.

15. The fermentation system according to any of the claims 9-14, wherein a second part of the circulation system comprises temperature regulating means configured for cooling said wort.

## Patentansprüche

1. Verfahren zum Gären einer Würze in einem Gärtank, der einen unteren Anschluss in einem Boden des Gärtanks und zumindest drei Seitenanschlüsse umfasst, wobei es sich um einen ersten Seitenanschluss, einen zweiten Seitenanschluss und einen dritten Seitenanschluss handelt, wobei die Seitenanschlüsse in Fluidverbindung miteinander stehen, die folgenden Schritte umfassend:
- Einlassen von Würze in den Gärtank über den unteren Anschluss;
- Ansetzen der Würze mit Hefe;
- Inkubieren der Würze mit Hefe unter Bedingungen, die der Hefe ermöglichen, zu wachsen, wodurch eine teilweise gegärte Würze erhalten wird;
- Pumpen der teilweise gegärten Würze aus dem Gärtank über zumindest einen der Seitenanschlüsse und zurück in den Gärtank über zumindest einen anderen der Seitenanschlüsse, um zumindest eine noch weiter gegärte Würze zu erhalten, und
- Ablassen der noch weiter gegärten Würze aus zumindest einem der Seitenanschlüsse.

2. Verfahren nach Anspruch 1, wobei die Seitenanschlüsse ferner in Fluidverbindung mit dem unteren Anschluss stehen und das Verfahren ferner den Schritt des Pumpens der teilweise gegärten Würze aus dem Gärtank über den unteren Anschluss und zurück in den Gärtank über zumindest einen der Seitenanschlüsse umfasst, um die teilweise gegärte Würze zu mischen.

3. Verfahren nach Anspruch 2, wobei der Schritt des Mischens der teilweise gegärten Würze vor dem Schritt des Erhaltens der noch weiter gegärten Würze durchgeführt wird.

4. Verfahren nach einem der vorhergehenden Ansprüche 2-3, wobei der Schritt des Mischens der teilweise gegärten Würze durch Zurückpumpen in den Gärtank über einen oberen Seitenanschluss, wie zum Beispiel dem dritten Seitenanschluss oder einem vierten Seitenanschluss, erfolgt.

5. Verfahren nach einem der vorhergehenden Ansprüche, wobei das Pumpen der teilweise gegärten Würze aus dem Gärtank über zumindest einen der Seitenanschlüsse und zurück in den Gärtank über zumindest einen anderen der Seitenanschlüsse ferner dem Sedimentieren von Hefezellen zum Boden des Gärtanks dient.

6. Verfahren nach Anspruch 5, wobei der Schritt des Sedimentierens von Hefezellen zum Boden des Gärtanks das Entfernen von mit den Hefezellen assoziierten CO₂-Blasen von den Hefezellen umfasst, wobei die Entfernung außerhalb des Gärtanks und innerhalb einer Fluidverbindung zwischen zumindest zwei Seitenanschlüssen stattfindet, indem die teilweise gegärte Würze einer kontrollierten Vibration bei einer vorbestimmten Frequenz ausgesetzt wird oder indem kontrollierbare Druckänderungen der teilweise gegärten Würze erzeugt werden.

7. Verfahren nach einem der Ansprüche, ferner umfassend den Schritt des Erntens der Hefezellen über den unteren Anschluss, wobei die Hefezellen am Boden des Gärtanks sedimentiert sind.

8. Verfahren nach einem der Ansprüche, ferner umfassend den Schritt des Kühlens der teilweise gegärten Würze außerhalb des Gärtanks.

9. Gärsystem zum Gären einer Würze, umfassend:
- einen Gärtank, umfassend eine Bodenfläche und eine Seitenwand, wobei sich ein unterer Anschluss in der Bodenfläche befindet und konfiguriert ist, um zumindest Würze in den Gärtank zu lassen, zumindest drei Seitenanschlüsse, wobei es sich um einen ersten Seitenanschluss, einen zweiten Seitenanschluss und einen dritten Seitenanschluss handelt, die sich auf der Seitenwand befinden, wobei die Seitenanschlüsse in Fluidverbindung miteinander stehen; und
- ein Zirkulationssystem zum Bereitstellen von Fluidverbindung zwischen den zumindest drei Seitenanschlüssen, und konfiguriert, sodass Würze und/oder teilweise gegärte Würze, und/oder gegärte Würze, zwischen den zumindest drei Seitenanschlüssen zirkuliert werden kann, wodurch eine Zirkulation der Würze aus dem Gärtank zurück in den Gärtank bereitgestellt wird, und das Zirkulationssystem ferner konfiguriert ist, sodass Würze und/oder teilweise gegärte Würze und/oder gegärte Würze über einen beliebigen der Seitenanschlüsse aus dem Gärtank abgelassen werden kann.

10. Gärsystem nach Anspruch 9, wobei die Seitenanschlüsse vertikal auf der Seitenwand getrennt sind und/oder wobei die Seitenanschlüsse vertikal entlang einer Linie auf der Seitenwand getrennt sind.

11. Gärsystem nach einem der Ansprüche 9-10, wobei das Gärsystem konfiguriert ist, um eine Zirkulation der Würze aus dem Gärtank über den unteren Anschluss und zurück in den Gärtank über einen oder mehrere der Seitenanschlüsse bereitzustellen.

12. Gärsystem nach einem der Ansprüche 9-11, wobei zumindest zwei der zumindest drei Seitenanschlüsse eine Düse umfassen, wobei jede der Düsen zwischen 20 Grad und 30 Grad relativ zu einer Tangente der Seitenwand gewinkelt ist.

13. Gärsystem nach einem der Ansprüche 9-12, wobei ein erster Teil des Zirkulationssystems ein CO₂-Entfernungsmittel umfasst, das konfiguriert ist, um CO₂-Blasen, die mit den Hefezellen assoziiert sind, von den Hefezellen zu entfernen.

14. Gärsystem nach Anspruch 13, wobei das CO₂-Entfernungsmittel eine gesteuerte Vibrationseinheit ist, die konfiguriert ist, um bei einer vorbestimmten Frequenz zu vibrieren, oder wobei das CO₂-Entfernungsmittel eine gesteuerte Druckeinheit ist, die konfiguriert ist, um Druckänderungen innerhalb der Fluidverbindungseinheit zu erzeugen.

15. Gärsystem nach einem der Ansprüche 9-14, wobei ein zweiter Teil des Zirkulationssystems Temperaturregulierungsmittel umfasst, die konfiguriert sind, um die Würze zu kühlen.

## Revendications

1. Procédé de fermentation d'un moût dans une cuve de fermentation comprenant un orifice inférieur dans une partie inférieure de la cuve de fermentation, et au moins trois orifices latéraux, étant un premier orifice latéral, un deuxième orifice latéral, et un troisième orifice latéral, dans lequel lesdits orifices latéraux sont en communication fluidique les uns avec les autres, comprenant les étapes :
- d'entrée du moût dans la cuve de fermentation par l'intermédiaire de l'orifice inférieur ;
- d'ensemencement du moût avec de la levure ;
- d'incubation du moût avec la levure dans des conditions permettant à la levure de croître, ce qui permet d'obtenir un moût en partie fermenté ;
- de pompage du moût en partie fermenté hors de la cuve de fermentation par l'intermédiaire d'au moins un des orifices latéraux et de renvoi de celui-ci à l'intérieur de la cuve de fermentation par l'intermédiaire d'au moins un autre des orifices latéraux pour au moins obtenir un moût davantage fermenté, et
- de retrait du moût davantage fermenté par au moins un des orifices latéraux.

2. Procédé selon la revendication 1, dans lequel lesdits orifices latéraux sont en outre en communication fluidique avec l'orifice inférieur, et le procédé comprend en outre l'étape de pompage du moût en partie fermenté hors de la cuve de fermentation par l'intermédiaire de l'orifice inférieur et de renvoi de celui-ci à l'intérieur de la cuve de fermentation par l'intermédiaire d'au moins un des orifices latéraux pour être mélangé au moût en partie fermenté.

3. Procédé selon la revendication 2, dans lequel l'étape de mélange du moût en partie fermenté est effectuée avant l'étape d'obtention du moût davantage fermenté.

4. Procédé selon l'une quelconque des revendications 2 ou 3 précédentes, dans lequel l'étape de mélange du moût en partie fermenté est effectuée en le renvoyant à l'intérieur de la cuve de fermentation par l'intermédiaire d'un orifice latéral supérieur, tel que le troisième orifice latéral ou un quatrième orifice latéral.

5. Procédé selon l'une quelconque des revendications précédentes, dans lequel le pompage du moût en partie fermenté hors de la cuve de fermentation par l'intermédiaire d'au moins un des orifices latéraux et son renvoi à l'intérieur de la cuve de fermentation par l'intermédiaire d'au moins un autre des orifices latéraux est en outre destiné à sédimenter les cellules de levure sur la partie inférieure de la cuve de fermentation.

6. Procédé selon la revendication 5, dans lequel l'étape de sédimentation des cellules de levure sur la partie inférieure de la cuve de fermentation comprend l'élimination des cellules de levure des bulles de CO₂ associées aux cellules de levure, l'élimination ayant lieu hors de la cuve de fermentation et à l'intérieur d'un raccordement fluidique entre au moins deux orifices latéraux en soumettant le moût en partie fermenté à des vibrations régulables à une fréquence prédéterminée, ou en générant de manière régulable des variations de pression du moût en partie fermenté.

7. Procédé selon l'une quelconque des revendications, comprenant en outre l'étape de récolte des cellules de levure par l'intermédiaire de l'orifice inférieur, dans lequel les cellules de levure ont sédimenté sur la partie inférieure de la cuve de fermentation.

8. Procédé selon l'une quelconque des revendications, comprenant en outre l'étape de refroidissement du moût en partie fermenté à l'extérieur de la cuve de fermentation.

9. Système de fermentation pour la fermentation d'un moût, comprenant :
- une cuve de fermentation comprenant une surface inférieure et une paroi latérale, un orifice inférieur situé dans la surface inférieure et conçu pour au moins laisser entrer le moût dans la cuve de fermentation, au moins trois orifices latéraux, étant un premier orifice latéral, un deuxième orifice latéral, et un troisième orifice latéral, situés sur la paroi latérale, dans lequel lesdits orifices latéraux sont en communication fluidique les uns avec les autres ; et
- un système de circulation pour fournir une communication fluidique entre lesdits au moins trois orifices latéraux, et conçu de sorte que le moût et/ou le moût en partie fermenté, et/ou le moût fermenté, est capable d'être mis en circulation entre lesdits au moins trois orifices latéraux, ce qui permet de fournir une circulation dudit moût de la cuve de fermentation renvoyé à l'intérieur de la cuve de fermentation, et le système de circulation est en outre conçu de sorte que le moût et/ou le moût en partie fermenté, et/ou le moût fermenté est capable d'être retiré de la cuve de fermentation par l'intermédiaire de l'un quelconque des orifices latéraux.

10. Système de fermentation selon la revendication 9, dans lequel les orifices latéraux sont séparés verticalement sur la paroi latérale, et/ou dans lequel les orifices latéraux sont séparés verticalement le long d'une ligne sur la paroi latérale.

11. Système de fermentation selon l'une quelconque des revendications 9 ou 10, le système de fermentation étant en outre conçu pour fournir une circulation dudit moût de la cuve de fermentation par l'intermédiaire de l'orifice inférieur et le renvoyer à l'intérieur de la cuve de fermentation par l'intermédiaire d'un ou plusieurs des orifices latéraux.

12. Système de fermentation selon l'une quelconque des revendications 9 à 11, dans lequel au moins deux des au moins trois orifices latéraux comprennent une buse, chacune des buses étant inclinée entre 20 degrés et 30 degrés par rapport à une tangente de la paroi latérale.

13. Système de fermentation selon l'une quelconque des revendications 9 à 12, dans lequel une première partie du système de circulation comprend un moyen d'élimination de CO₂ conçu pour éliminer des cellules de levure des bulles de CO₂ associées aux cellules de levure.

14. Système de fermentation selon la revendication 13, dans lequel le moyen d'élimination de CO₂ est une unité à vibrations régulées conçue pour vibrer à une fréquence prédéterminée, ou dans lequel le moyen d'élimination de CO₂ est une unité à pression régulée conçue pour générer des variations de pression à l'intérieur de l'unité de communication fluidique.

15. Système de fermentation selon l'une quelconque des revendications 9 à 14, dans lequel une seconde partie du système de circulation comprend un moyen de régulation de la température conçu pour refroidir ledit moût.
